# EUROPÄISCHE PATENTSCHRIFT

(11) **EP 0 555 643 B1**
(45) Veröffentlichungstag und Bekanntmachung des Hinweises auf die Patenterteilung: **13.03.1996**
(21) Anmeldenummer: 93100387.5
(22) Anmeldetag: 13.01.1993
(51) Int. Cl.: F16F 15/12

(54) **Antriebsverbindung mit Drehschwingungsdämpfung im Antriebsstrang eines Kraftfahrzeugs**
Drive connection with torsional damping in a drive line of a vehicle
Dispositif de transmission avec amortisseur de vibrations de torsion dans un train d'entraînement d'un véhicule

(30) Priorität: 13.02.1992 DE 4204244
(43) Veröffentlichungstag der Anmeldung: 18.08.1993
(73) Patentinhaber: Dr.Ing.h.c. F. Porsche Aktiengesellschaft, D-70435 Stuttgart (DE)
(72) Erfinder: Müller, Hubert, W-7533 Tiefenbronn (DE); Herrmann, Rudolf, W-7251 Wimsheim (DE)

(56) Entgegenhaltungen:
- DE-A- 3 934 798
- DE-U- 8 611 990
- FR-A- 2 607 891
- US-A- 4 318 283
- US-A- 4 626 226

## Beschreibung

Die Erfindung betrifft eine Antriebsverbindung mit Drehschwingungsdämpfung im Antriebsstrang eines Kraftfahrzeugs, insbesondere eines Motorrades nach dem Oberbegriff des Anspruchs 1.

Aus der US-A 4,318,283 ist eine gattungsgemäße Antriebsverbindung mit Drehschwingungsdämpfung im Antriebsstrang eines Kraftfahrzeuges bekannt, bei der zwischen einer Antriebsscheibe und einer Abtriebswelle ein Lamellenpaket aus zwei Außenlamellen und einer Innenlamelle angeordnet ist. Die Außenlamellen sind dabei mit dem Lamellengehäuse drehfest verbunden, während die Innenlamelle mit der Abtriebswelle drehfest gekoppelt ist. Die beiden Außenlamellen und die Innenlamelle sind über mehrere Federelemente gekoppelt, die in radial verlaufenden Ausnehmungen der drei Lamellenscheiben angeordnet sind. Durch diese Federanordnung und durch mechanische Anschläge wird die relative Verdrehbarkeit der Lamellen zueinander begrenzt.

Aus DE-OS 25 46 804 ist weiterhin eine Antriebsverbindung für ein Motorrad bekannt, bei der zwischen einer Antriebsscheibe und einer Abtriebsscheibe eine Dämpfungsvorrichtung für Drehschwingungen eingesetzt ist. Die Dämpfungsvorrichtung besteht aus gummielastischen Dämpfungselementen mit zwei Bereichen unterschiedlich großen Volumens. Bei gleichem Einbauraum kann so eine größere Anzahl von Dämpfungselementen eingebaut und eine erhöhte Dämpfungskraft erzielt werden.

Es ist die Aufgabe der Erfindung, eine Antriebsverbindung zu schaffen, bei der eine Drehschwingungsdämpfung durch geeignete Bemessung gesonderter Feder- und Reibungselemente erzielbar ist, und bei der Stöße im Antriebsstrang durch eine elastische Drehverbindung mit großen Verdrehwinkeln weitgehend abgebaut werden.

Zur Lösung dieser Aufgabe dienen die kennzeichnenden Merkmale des Anspruchs 1. Wenn in einem Antriebsstrang ein federbelastetes Lamellenpaket eingesetzt wird, kann durch Größenbemessung der Feder sowie der Anzahl und Größe der Lamellenreibflächen die Federkraft und Reibkraft unabhängig voneinander gewählt werden, so daß die Dämpfungskraft weitaus exakter als bei Verwendung gummielastischer Dämpfungselemente festgelegt werden kann. Bei Verwendung metallischer Reibelemente ist auch der Abrieb sehr gering. Durch den Einbau von in Umfangsrichtung wirkenden, die Drehbewegung übertragenden Schraubenfedern wird eine elastische Drehverbindung mit großen Verdrehwinkeln möglich, die dazu beiträgt, Stöße im Antriebsstrang weitgehend abzubauen.

Weitere, die Erfindung ausgestaltende Merkmale enthalten die Ansprüche 2 bis 9. Wenn die Dämpfungsvorrichtung zwischen der Brennkraftmaschine und dem Gangschaltgetriebe des Motorrads angeordnet ist, werden die Schaltstöße, Lastwechselstöße, das Getriebegeräusch und die Zahnradbelastung reduziert. Die Dämpfung ist gangunabhängig und kann optimal auf die Drehschwingungsanregung der Brennkraftmaschine abgestimmt werden.

Ein Ausführungsbeispiel der Erfindung ist in der Zeichnung dargestellt und wird nachfolgend erläutert.

Es zeigen:

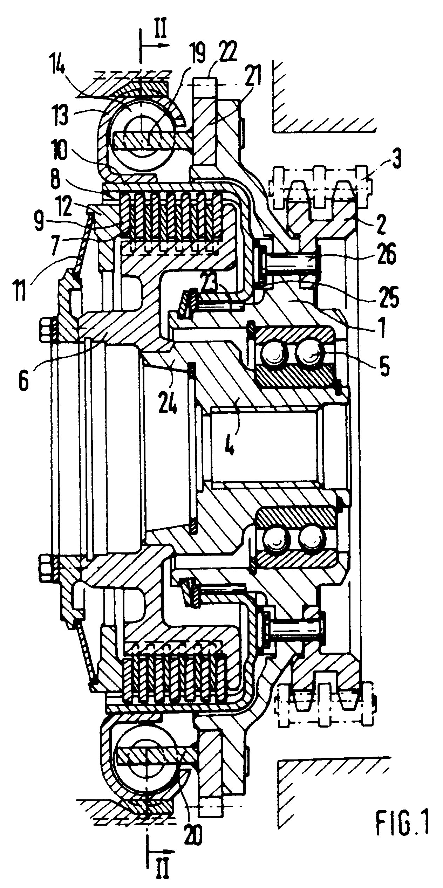

- Fig. 1: Antriebsverbindung im Längsschnitt,

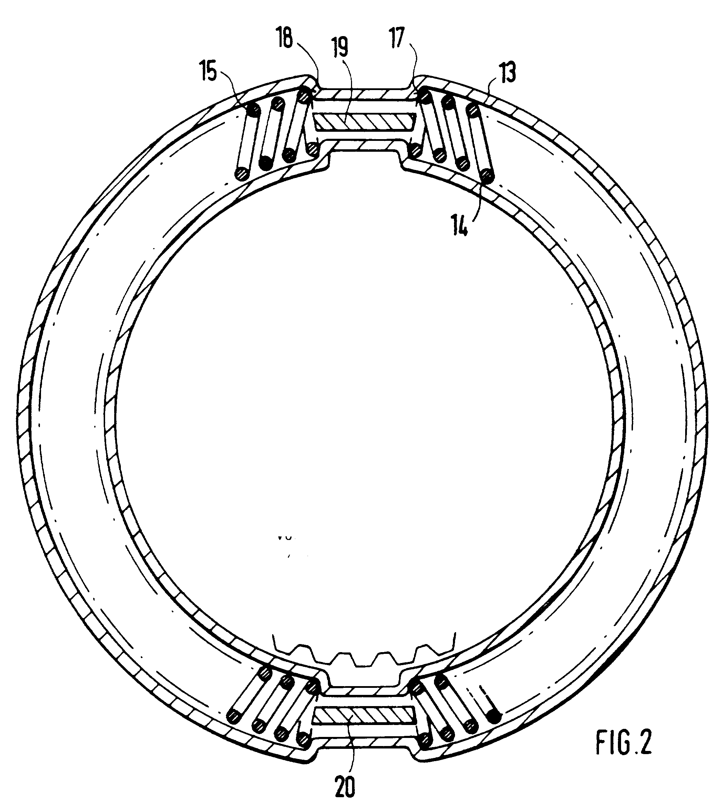

- Fig. 2: Schnitt nach Linie II-II der Fig. 1.

Eine Antriebsscheibe 1 wird durch ein an ihr angenietetes Kettenrad 2 mit einer Kette 3 von der Brennkraftmaschine des Motorrades angetrieben. Eine hohl ausgebildete Abtriebswelle 4 zum Gangschaltgetriebe ist in einem Kugellager 5 der Antriebsscheibe 1 gelagert und durch eine Antriebsverbindung mit ihr drehmomentübertragend und drehschwingungsgedämpft verbunden. Hierzu ist auf der Abtriebswelle 4 ein Lamellenträger 6 zentriert und befestigt, in dessen Keilverzahnung die Innenlamellen 7 eines Lamellenpaketes 8 aufgereiht sind. Die Innenlamellen 7 liegen an Außenlamellen 9 an, die in einem Lamellengehäuse 10 drehfest sind. Das Lamellenpaket 8 wird durch eine am Lamellenträger 6 befestigte Biegefeder 11 über einen Druckring 12 zusammengedrückt. An der Außenseite des Lamellengehäuses 10 ist ein torusförmiges, rohrförmig gestaltetes Federgehäuse 13 befestigt. In ihm liegen zwei Schraubenfedern 14 und 15, die zuvor bei der Fertigung zu Halbkreisringen verbogen wurden, um ihre Wandreibung gering zu halten. Die Federenden der vorgespannten Schraubenfedern 14, 15 liegen an Rohrabsätzen 17, 18 des Federgehäuses 13 an. Zwischen den Federenden der beiden Schraubenfedern 14, 15 sind Quaderstücke 19, 20 vorgespannt, die an einem Flanschring 21 angeschweißt sind. Der Flanschring 21 ist an der Antriebsscheibe 1 angeflanscht. Er trägt einen Zahnkranz 22, mit dem ein nicht gezeichnetes Anlasserritzel in Eingriff bringbar ist.

Das U-förmig gestaltete Lamellengehäuse 10 ist mit einem Gleitlager 23 auf einer Nabe 24 der Antriebsscheibe 1 gelagert. Zwischen der Stirnseite des Lamellengehäuses 10 und der Stirnseite der Antriebsscheibe 1 ist ein Dämpfungsring 25 eingelegt, der zusammen mit dem Kettenrad 2 mit der Antriebsscheibe 1 durch Nieten 25 verbunden ist.

Das Antriebsdrehmoment wird über die Schraubenfedern 14, 15 auf das Lamellengehäuse 8 übertragen. Die Schraubenfedern sind so bemessen, daß sich bei Übertragung eines maximalen Drehmoments eine Relativdrehung zwischen der Antriebsscheibe 1 und dem Lamellengehäuse 10 von ca. 45° in beiden Umfangsrichtungen ergeben kann. Die Drehbewegung wird gedämpft durch die mechanische Reibung eines Dämpfungsringes 25. Durch den Einbau des Lamellenpaketes 8 zwischen dem Lamellengehäuse 10 und Lamellenträger 6 ist auch an dieser Stelle eine starre Kraftübertragung verhindert. Bei sehr starken Drehmomentstößen können sich die Außenlamellen 9 gegenüber den Innenlamellen 7 verdrehen und so einen Abbau der Drehmomentspitze bewirken.

## Patentansprüche

1. Antriebsverbindung mit Drehschwingungsdämpfung im Antriebsstrang eines Kraftfahrzeugs, insbesondere eines Motorrades, zwischen einer Antriebsscheibe (1) und einer in ihr drehbeweglich gelagerten Abtriebswelle (4), wobei zwischen der Antriebsscheibe (1) und Abtriebswelle (4) ein Lamellenpaket (8) aus miteinander mittels Federkraft reibschlüssig verbundenen Lamellen (8,9) angeordnet ist mit mindestens einer Innenlamelle (7) und an einem Lamellengehäuse (10) drehfesten Außenlamellen (9), wobei das Lamellengehäuse mit der Antriebsscheibe (1) verbunden ist und die mindestens eine Innenlamelle (7) an einem an der Abtriebswelle (4) befestigten Lamellenträger (6) drehfest ist, **dadurch gekennzeichnet, daß** mehr als eine Innenlamelle (7) vorgesehen ist und das Lamellengehäuse (10) mit der Antriebsscheibe (1) unter Zwischenschaltung von Schraubenfedern (14, 15) verbunden ist.

2. Antriebsverbindung nach Anspruch 1, **gekennzeichnet** durch zwei halbkreisförmig vorgebogene, in einem rohrförmigen Federgehäuse (13) auf Abstand zueinander liegende, vorgespannte Schraubenfedern (14, 15), zwischen deren Federenden Quaderstücke (19, 20) eingespannt sind, die an einem mit der Antriebsscheibe (1) verschraubten Flanschring (21) befestigt sind.

3. Antriebsverbindung nach Anspruch 2, **dadurch gekennzeichnet,** daß der Flanschring (21) einen Zahnkranz (22) zum Eingriff in ein Anlasserritzel trägt.

4. Antriebsverbindung nach Anspruch 1, **dadurch gekennzeichnet,** daß zwischen den Stirnseiten des Lamellengehäuses (10) und der Antriebsscheibe (1) ein Dämpfungsring (25) eingelegt ist.

5. Antriebsverbindung nach Anspruch 1, **dadurch gekennzeichnet,** daß das Lamellengehäuse (10) auf einer Nabe (24) der Antriebsscheibe (1) drehbar gelagert ist.

6. Antriebsverbindung nach Anspruch 1, **dadurch gekennzeichnet,** daß die Abtriebswelle (4) als Hohlwelle gestaltet ist und daß auf ihr der Lamellenträger (6) zentriert und befestigt ist.

7. Antriebsverbindung nach Anspruch 4, **dadurch gekennzeichnet,** daß der Dämpfungsring (25) zusammen mit einem Antriebskettentrad (2) mit der Antriebsscheibe (1) vernietet ist.

8. Antriebsverbindung nach Anspruch 1, **dadurch gekennzeichnet,** daß die Reibkraft der Lamellen (7, 9) durch Bemessen einer das Lamellenpaket (8) zusammendrückenden, am Lamellenträger (6) befestigten Biegefeder (11) vorwählbar ist.

9. Antriebsverbindung nach einem der Ansprüche 1 bis 8, **dadurch gekennzeichnet,** daß sie zwischen der Brennkraftmaschine und dem Gangschaltgetriebe des Motorrades angeordnet ist.

## Claims

1. A drive connexion with torsional-vibration damping in the drive train of a motor vehicle, in particular of a motorcycle, between a driving wheel (1) and a driven shaft (4) mounted rotatably therein, wherein a stack of discs (8) comprising discs (8, 9) connected to one another with friction locking by means of spring force is arranged between the driving wheel (1) and the driven shaft (4), with at least one inner disc (7), and outer discs (9) rotationally fixed on a disc housing (10), wherein the disc housing is connected to the driving wheel (1) and the at least one inner disc (7) is rotationally fixed on a disc carrier (6) secured to the driven shaft (4), **characterized in that** more than one inner disc (7) is provided and the disc housing (10) is connected to the driving wheel (1) with the interposition of helical springs (14, 15).

2. A drive connexion according to Claim 1, **characterized by** two pre-stressed helical springs (14, 15) which are bent into a semicircular shape and are spaced from each other in a tubular spring casing (13) and between the ends of which cuboid members (19, 20) are clamped which are secured to a flange ring (21) bolted to the driving wheel (1).

3. A drive connexion according to Claim 2, **characterized in that** the flange ring (21) has a toothed rim (22) for engaging in a starter pinion.

4. A drive connexion according to Claim 1, **characterized in that** a damping ring (25) is inserted between the end faces of the disc housing (10) and the driving wheel (1).

5. A drive connexion according to Claim 1, **characterized in that** the disc housing (10) is mounted rotatably on a hub (24) of the driving wheel (1).

6. A drive connexion according to Claim 1, **characterized in that** the driven shaft (4) is constructed in the form of a hollow shaft, and the disc carrier (6) is secured centred thereon.

7. A drive connexion according to Claim 4, **characterized in that** the damping ring (25) together with a driving sprocket wheel (2) is riveted to the driving wheel (1).

8. A drive connexion according to Claim 1, **characterized in that** the frictional force of the discs (7, 9) is pre-selectable by dimensioning a flexural spring (11) compressing the stack of discs (8) and secured to the disc carrier (6).

9. A drive connexion according to one of Claims 1 to 8, **characterized in that** it is arranged between the internal-combustion engine and the gear-shift transmission of the motorcycle.

## Revendications

1. Liaison motrice avec amortissement d'oscillations de torsion dans la chaîne cinématique d'un véhicule automobile, en particulier d'une moto, entre un disque d'entraînement (1) et un arbre de sortie (4), monté mobile en rotation dans celui-ci, dans laquelle, entre le disque d'entraînement (1) et l'arbre de sortie (4), est placé un paquet de lamelles (8) fait de lamelles (8, 9) reliées entre elles par friction, au moyen de la force d'un ressort, avec au moins une lamelle intérieure (7) et des lamelles extérieures (9), montées fixes en rotation sur un boîtier de lamelles (10), dans laquelle le boîtier de lamelles est relié au disque d'entraînement (1) et au moins une lamelle intérieure (7) est montée fixe en rotation sur un porte-lamelles (6) fixé sur l'arbre de sortie (4), caractérisée en ce qu'il est prévu plus d'une lamelle intérieure (7) et le boîtier de lamelles (10) est relié au disque d'entraînement (1), par l'intermédiaire de ressorts hélicoïdaux (14, 15).

2. Liaison motrice selon la revendication 1, caractérisée par deux ressorts hélicoïdaux (14, 15) précintrés en demi-cercle, précontraints, situés espacés l'un de l'autre dans un boîtier de ressort (13) tubulaire, entre les extrémités desquels sont serrées des pièces carrées (19, 20), qui sont fixées sur un anneau de bride (21), vissé avec le disque d'entraînement (1).

3. Liaison motrice selon la revendication 2, caractérisée en ce que l'anneau de bride (21) porte une couronne dentée (22) pour l'engagement dans un pignon de démarreur.

4. Liaison motrice selon la revendication 1, caractérisée en ce qu'un anneau d'amortissement (25) est placé entre les côtés frontaux du boîtier de lamelles (10) et le disque d'entraînement (1).

5. Liaison motrice selon la revendication 1, caractérisée en ce que le boîtier de lamelles (10) est monté tournant sur un moyeu (24) du disque d'entraînement (1).

6. Liaison motrice selon la revendication 1, caractérisée en ce que l'arbre de sortie (4) est réalisé en arbre creux et en ce que le porte-lamelles (6) est centré et fixé sur celui-ci.

7. Liaison motrice selon la revendication 4, caractérisée en ce que l'anneau d'amortissement (25) est riveté, conjointement avec une roue de chaîne d'entraînement (2), avec le disque d'entraînement (1).

8. Liaison motrice selon la revendication 1, caractérisée en ce que la force de friction des lamelles (7, 9) peut être présélectionnée par dimensionnement d'un ressort spiral (11), comprimant le paquet de lamelles (8), fixé sur le porte-lamelles (6).

9. Liaison motrice selon l'une des revendications 1 à 8, caractérisée en ce qu'elle est placée entre le moteur à combustion interne et la boîte de vitesses de la moto.
